**Europäisches Patentamt**

**European Patent Office**

**Office européen des brevets**

(19)

(11) Numéro de publication : **0 385 514 B1**

(12)

# FASCICULE DE BREVET EUROPEEN

(45) Date de publication du fascicule du brevet :
**09.09.92 Bulletin 92/37**

(51) Int. Cl.⁵ : **C10L 5/44,** F23B 1/14,
A01G 23/093

(21) Numéro de dépôt : **90106484.0**

(22) Date de dépôt : **26.05.86**

(54) **Procédé d'obtention de bois torréfié produit obtenu et application à la production d'énergie.**

(30) Priorité : **24.05.85 FR 8507839**
**07.10.85 FR 8514792**
**10.01.86 FR 8600307**
**13.02.86 FR 8601969**

(43) Date de publication de la demande :
**05.09.90 Bulletin 90/36**

(45) Mention de la délivrance du brevet :
**09.09.92 Bulletin 92/37**

(84) Etats contractants désignés :
**AT BE CH DE GB IT LI LU NL SE**

(56) Documents cités :
**WO-A-79/00610**
**DE-A- 3 018 039**
**DE-A- 3 041 627**
**FR-A- 2 489 356**

(56) Documents cités :
**FR-A- 2 512 636**
**US-A- 4 231 302**
**US-A- 4 295 822**
**US-A- 4 338 985**

(60) Numéro de publication de la demande initiale
en application de l'article 76 CBE : **0 223 807**

(73) Titulaire : **Le Clerc de Bussy, Jacques**
**Bussy les Boix**
**F-80290 Poix de Picardie (FR)**

(72) Inventeur : **Le Clerc de Bussy, Jacques**
**Bussy les Boix**
**F-80290 Poix de Picardie (FR)**

(74) Mandataire : **Colas, Jean-Pierre et al**
**Cabinet de Boisse 37, avenue Franklin D.**
**Roosevelt**
**F-75008 Paris (FR)**

**Description**

La présente invention est relative à un produit provenant de la torréfaction de morceaux de bois, à un procédé pour l'obtention de cette matière et à une application particulière de ce produit.

On sait que le bois, chauffé à une température de 2OO à 3OO° C environ, donne ce qu'on peut appeler du "bois torréfié", c'est-à-dire un produit à forte teneur en carbone fixe, à pouvoir calorifique élevé, à très faible teneur en eau, environ 3 %, non hygroscopique et imputrescible, ayant gardé pratiquement tous les composés pyroligneux.

Il a été proposé d'amener à l'état de bois torréfié des morceaux ligneux d'origines diverses afin de les agglomérer à l'aide d'un liant ajouté (FR-A-953 OO4) ou en utilisant comme liant les goudrons produits par le bois lui-même (CH-A-228 877), pour en faire un combustible.

On a également proposé, EP-A-OO7 374, d'utiliser du bois torréfié sous atmosphère neutre sans agglomération ultérieure, notamment comme combustible.

FR-A-2.489.356 décrit un procédé de carbonisation de matières carbonées telles que le bois, selon lequel on utilise le gaz produit par la carbonisation de la matière première pour produire la chaleur nécessaire à cette carbonisation. Pour cela, après avoir éliminé de ce gaz les matières condensables, on l'échauffe en l'envoyant refroidir la matière qui vient d'être carbonisée, puis on l'envoie dans un foyer où il est brulé, et les fumées sortant de ce foyer, qui doivent en principe ne pas être oxydantes, sont envoyées dans un réacteur qui contient la masse à carboniser.

Une telle manière de faire suppose que le gaz, après élimination des matières condensables, ait un pouvoir calorifique important, ce qui est le cas lorsqu'on produit du charbon de bois. Lorsqu'on désire procéder à une simple torréfaction, à température beaucoup plus basse qu'une carbonisation, les gaz produits contiennent une proportion d'eau tellement importante que leur pouvoir calorifique est très faible, si bien que le procédé qu'on vient de décrire est sans intérêt pratique.

WO-A-79.00610 décrit un procédé de carbonisation où on cherche également à exploiter le pouvoir calorifique des gaz produits par la carbonisation pour produire la chaleur nécessaire à cette carbonisation. Ici, il n'y a pas de séparation des matières condensables, l'ensemble des gaz est envoyé dans la zone la plus chaude du four pour y être craqué en présence d'air, puis envoyé dans un foyer pour produire de l'air chaud qui sert à la carbonisation. Ce procédé, dans le cas de la torréfaction, se heurte à la même objection que la précédente, à savoir le pouvoir calorifique insuffisant des gaz produits dans ces conditions.

Le but de l'invention est de fournir un procédé d'obtention de bois torréfié à partir de tronçons de bois verts, qui permette d'obtenir des rendements intéressants et soit de conduite facile.

Pour obtenir ce résultat, l'invention fournit un procédé d'obtention d'un produit formé de bois torréfié à partir de tronçons de bois verts, selon lequel on place une masse de tronçons à torréfier dans un réacteur , et on fait circuler dans cette masse un gaz non oxydant, ce gaz pénétrant dans la masse à une température supérieure à celle de la torréfaction, caractérisé en ce que ledit gaz traverse la masse en passant d'abord sur des tronçons non séchés ou partiellement séchés, et sort de la masse en passant sur les tronçons en fin de torréfaction et en ce que la vitesse de circulation des gaz n'est que faiblement inférieure à celle qui causerait l'entraînement des tronçons torréfiés par le courant de gaz.

De préférence, on utilise des tronçons sensiblement rectilignes et de longueur uniforme, de façon à obtenir, en masse, une perméabilité aux gaz importante et régulière, même si, individuellement, chaque tronçon n'est pas perméable. D'autres modalités de la torréfaction font l'objet des revendications 3 à 9.

Au-delà d'une température de l'ordre de 25O° C, la transformation du bois devient exothermique, et, en présence d'air, une inflammation est à craindre si la réaction est mal contrôlée. Il est donc connu que l'emploi d'une atmosphère neutre est préférable.

Le mode de circulation des gaz à co-courant a pour conséquence d'abord un échauffement brusque des tronçons verts, avec départ rapide de l'eau qui entraîne une large ouverture des portes, et ensuite une différence faible de température entre les tronçons en fin de torréfaction et le gaz qui les entoure, ce qui rend plus facile le contrôle de la réaction, en vue notamment d'empêcher son emballement. Les gaz cependant circulent à grande vitesse, ce qui facilite l'obtention de températures homogènes. Cette vitesse est facilitée par la perméabilité de la masse.

De préférence, ledit gaz non oxydant circule en partie en circuit fermé, et est constitué essentiellement de vapeur d'eau provenant des tronçons et de gaz de combustion provenant d'un brûleur destiné à élever la température dudit gaz. La forte capacité calorifique de la vapeur d'eau facilite les échanges, d'autre part cette vapeur a l'avantage ici d'être gratuite, on ajoutera qu'elle n'est ni toxique ni polluante.

Avantageusement, une partie dudit gaz est refroidie et débarassée d'une partie de son eau, puis envoyée dans la masse qui vient d'être torréfiée, de façon à la refroidir et à empêcher l'apparition de réactions exothermiques. On forme ainsi un système particulièrement intéressant, puisque la capacité calorifique de la vapeur d'eau est encore une fois mise à profit pour le contrôle de la bonne marche du processus.

Les modalités ci-dessus permettent des temps d'opérations très brefs, et avantageusement le temps de torréfaction à partir du moment où le produit atteint 1OO° C, ne dépasse pas 1O minutes. Cela rend la marche encore plus facile à contrôler, car les réactions exothermiques n'ont que peu de temps pour apparaître.

Avantageusement, la torréfaction et le refroidissement sont effectués dans une enceinte unique s'étendant verticalement et pourvue de dispositifs étanches pour l'admission à la partie supérieure et pour l'évacuation à la partie inférieure, du gaz non oxydant à haute température étant envoyé à la partie supérieure sous une pression supérieure à la pression atmosphérique, du gaz non oxydant à basse température étant envoyé à la partie inférieure sous une pression supérieure à la pression atmosphérique, un moyen d'extraction étant prévu pour faire passer le produit qui a été torréfié dans la zone supérieure de l'enceinte vers la zone inférieure, où il se refroidit. On réalise ainsi une unité compacte, où les pertes thermiques sont réduites. En outre, le contrôle de la marche est facilitée : si, par exemple, à la suite d'un échauffement exagéré on réduit l'envoi de gaz chaud, il en résulte, dans la partie centrale, un afflux de gaz froid qui amplifie l' effet et l'inertie thermique est donc réduite.

Avantageusement, on renvoie à la partie supérieure de l'enceinte une partie du gaz non oxydant qui a été évacué de la zone centrale de l'enceinte. Cela permet d'obtenir, en limitant les pertes thermiques, l'atmosphère nécessaire en partie haute du four.

Avantageusement aussi le séchage précède la torréfaction sans refroidissement intermédiaire et de préférence ce séchage est opéré à l'aide des gaz chauds provenant de la torréfaction. Il s'agit ici du séchage à température inférieure à 1OO° C. Les dispositions qu'on vient de mentionner limitent encore les pertes d'énergie.

Le produit de l'invention est apte à de nombreuses applications.

Il constitue en effet une matière première de choix pour toutes sortes de traitements chimiques, y compris la combustion qui sera examinée plus loin. On notera aussi que son imputrescibilité peut être mise à profit pour constituer par mélange avec du béton, des agglomérés isolants légers pour le bâtiment. On observera aussi qu'il peut être additionné à divers déchets des exploitations forestières ou des industries du bois qui, autrement seraient pratiquement inexploitables, et qui peuvent ainsi être utilisés facilement dans un brûleur par exemple.

On va décrire maintenant plus en détail l'application du produit de l'invention à la production d'énergie.

De préférence, selon cette application, on extrait par distillation sensiblement toutes les matières pyroligneuses contenues dans le produit torréfié, on transforme le carbone restant en monoxyde de carbone, la chaleur produite par cette réaction étant utilisée pour opérer ladite distillation, et on envoie ensemble le mélange des matières pyroligneuses et du monoxyde de carbone dans un brûleur, en maintenant la température desdites matières pyroligneuses au dessus de leur point de condensation.

Suivant des modalités avantageuses:

– la distillation des matières pyroligneuses et la transformation du carbone en monoxyde de carbone ont lieu dans le même foyer, qui est pourvu d'une part d'un ou plusieurs passages de gaz pour balayer les matières pyroligneuses et d'autre part d'un ou plusieurs passages d'air pour la transformation du carbone en monoxyde de carbone, le foyer comportant une sortie commune pour les matières pyroligneuses distillées et pour le monoxyde de carbone.

– le gaz destiné à balayer les matières pyroligneuses traverse , dans le sens des températures croissantes, une masse de produit torréfié d'épaisseur suffisante pour assurer un débit sensiblement constant.

– le foyer est du type vertical, le produit torréfié progressant en descendant dans ce foyer, le gaz de balayage traversant la masse de produit torréfié en descendant, la ou les arrivées d'air pour la transformation du carbone étant situées au-dessus d'une couche de cendre maintenue à un niveau sensiblement constant, et la sortie commune des matières pyroligneuses et du monoxyde de carbone étant située entre le niveau des cendres et celui de la base de la zone de distillation.

– on utilise un brûleur du type à induction à air pilote capable d'engendrer dans le foyer une dépression suffisante pour y aspirer le gaz de balayage et l'air de transformation du carbone.

L'invention va maintenant être exposée plus en détail à l'aide d'exemples pratiques illustrés à l'aide des dessins parmi lesquels :

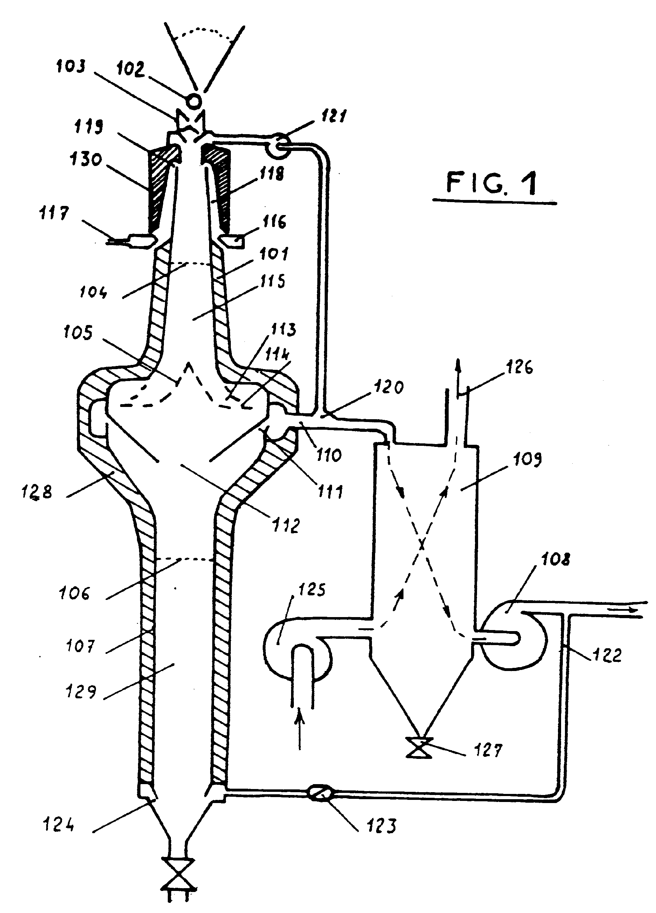

la figure 1 est une vue schématique en coupe d'un torréfacteur ;

la figure 2 est une vue schématique en coupe d'une installation de combustion du produit, et

la figure 3 est une vue schématique en coupe d'une variante de la figure 2.

Le procédé selon l'invention se propose l'extraction brutale de l'eau encore contenue dans les tronçons, dont les canaux ont été ouverts aux deux extrémités lors du tranchage, à l'aide d'un flux rapide de gaz à haute température balayant leurs surfaces.

Le procédé de grillage et de torréfaction sous atmosphère neutre, de fragments de bois encore humides amenés en continu et rassemblés en masse de hauteur maintenue constante dans un réacteur de forme tronconique placé verticalement, est caractérisé en ce que, mis en mouvement grâce à la dépression établie au travers de ladite masse, le gaz caloporteur neutre est élevé à une température supérieure à celle requise pour obtenir la torréfaction du bois et suffisante pour réaliser, par grillage, le séchage brutal desdits fragments dès que déposés dans le réacteur, séchage ayant pour effet d'abaisser la température desdits gaz qui mélés à la vapeur dégagée constituent le flux gazeux neutre et ramené à la température capable d'assurer, pendant qu'il la traverse, la torréfaction de ladite masse.

C'est un aspect du mode de torréfaction selon l'invention d'utiliser l'eau, contenue dans le bois lui-même, transformée en vapeur comme un des constituants de l'atmosphère neutre dans laquelle doit s'effectuer la torréfaction.

Afin de réaliser l'objet du procédé ci-dessus décrit, il est indispensable que les échanges calorifiques entre le gaz caloporteur et les fragments de bois soient ra-rapides. Ce résultat provient de la mise en oeuvre d'un flux gazeux, enveloppant lesdits fragments, circulant à grande vitesse et ayant une inertie calorifique suffisante pour assurer d'abord le grillage provoquant le séchage initial du bois et ensuite sa torréfaction.

On conçoit aussi qu'il est économiquement intéressant de faire se succéder immédiatement dans le même appareil les opérations de séchage et de torréfaction.

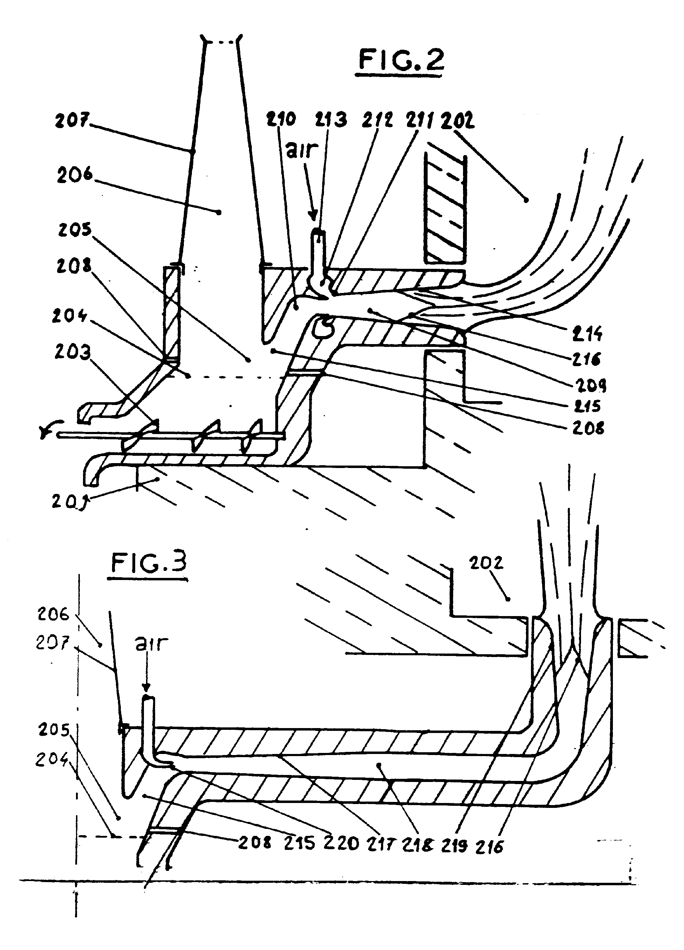

La description qui va suivre d'un dispositif, schématiquement représenté en coupe à la figure 3, conforme à l'invention ainsi que son mode de fonctionnement permettront une meilleure compréhension du procédé.

Le dispositif comporte essentiellement un organe dénommé réacteur 101 dans lequel sont effectuées les opérations de grillage produisant le séchage initial, suivi de la torréfaction des fragments de bois amenés en continu par le distributeur 102. Les fragments passent au travers de chicanes 103, dont nous verrons plus loin l'objet, avant d'être déposés sur le lit de grillage 104. Ce lit est maintenu à hauteur constante grâce à l'action d'un extracteur à plateau rotatif 105 qui enlève, en continu le bois une fois torréfié. Les allures du distributeur et de l'extracteur sont réglées dans le rapport convenable qui tient compte du retrait qui accompagne le séchage et la torréfaction. Le temps de séjour dans le réacteur est déterminé par la vitesse du transfert.

Le bois torréfié, extrait du réacteur, est déposé au sommet 106 de la masse rassemblée dans le réceptacle 107. Ce dernier, d'une certaine capacité est équipé à sa base d'un système approprié et non représenté, à double sas permettant le retrait par bols successifs du bois torréfié, sans permettre la pénétration d'air dans le dispositif.

Un ventilateur H.P. 108 met en dépression le dispositif comprenant le réceptacle, l'extracteur et le réacteur. Cette dépression est transmise au dispositif par l'intermédiaire de l'échangeur-condenseur 109, de la tuyauterie 110, de l'ajutage annulaire 111 et de l'ouverture 112. Elle est appliquée à la masse 115 en cours de traitement en passant au travers du plateau rotatif et perforé 105 de la base de la jupe du réacteur 113 elle aussi perforée et de l'espace annulaire 114 occupé par des fragments de bois torréfié en cours de transfert.

On remarquera la grande surface que présente au passage du flux gazeux ces éléments situés à la base du réacteur. Cette disposition ralentit la vitesse du flux dont la force vive n'est plus suffisante pour entraîner les fragments situés dans l'espace 114.

Cette dépression met en mouvement le flux de gaz caloporteur et circulant à grande vitesse entre les fragments de bois déposés sur le lit 104, flux appelé à réaliser les traitements successifs de grillage et de torréfaction du bois.

Le procédé selon l'invention se caractérise encore en ce que le gaz caloporteur est constitué du mélange, d'une partie importante des gaz neutres recyclés prélevés à la sortie du réacteur 101, et donc à la température de torréfaction, et des gaz brûlés issus de la combustion dans la chambre 118 d'un gaz combustible amené au brûleur 116, mélange dont la température, deux à trois fois supérieure à celle appliquée lors de la torréfaction qui suivra, est capable de réaliser sur le lit fixe 104 du réacteur 101 le grillage initial du bois humide.

Le gaz recyclé est repris au circuit en 120 à l'aide du surpresseur 121. Le gaz combustible est amené au brûleur annulaire 116 par la canalisation 117.

Le surpresseur 121 ramène le gaz prélevé à la sortir du réacteur à une pression suffisante pour alimenter ledit réacteur 101 et pour créer au travers de la chicane 103 une légère surpression s'opposant à l'entrée de l'air à ce niveau, mais autorisant l'entrée des fragments de bois amenés par le distributeur 102.

Le gaz combustible sera avantageusement celui obtenu à partir d'une portion de bois torréfié lui-même, prélevé sur la production et gazéifié. L'ordre de grandeur de la quantité consommée est d'environ 10 % à 12 %.

Le temps nécessaire aux opérations successives de grillage provoquant le séchage brutal du bois et de sa torréfaction s'établit entre 3 et 6 minutes selon les températures mises en oeuvre et la dimension moyenne des fragments (inférieure ou égale au cm$^3$). Ces temps qui sont donnés à titre d'exemple ne sont pas limitatifs. Ils correspondent au temps de séjour moyen des fragments dans le réacteur.

Le gaz issu du réacteur et qui n'a pas été recyclé, traverse l'échangeur 109 avant d'être rejeté à l'atmosphère. Cet échangeur est aussi un condenseur, il permet d'extraire l'eau collectée en 127 et évacuée à l'aide d'une pompe non représentée, et, de récupérer les calories contenues dans lesdits gaz. Ces calories sont transférées à de l'air ambiant amené à l'échangeur 109 par le ventilateur 125 et conduit, en passant par la canalisation 126 vers un séchoir à bois, non représenté, installé en amont du réacteur. Ce séchoir a pour objet d'abaisser d'environ 50 % la teneur en eau du bois, matière première et de le préchauffer à une température voisine de 90° C. Ces techniques sont suffisamment connues pour qu'il ne soit pas nécessaire de les exposer en détail.

Le procédé selon l'invention se caractérise aussi par le fait qu'une partie des gaz neutres, refroidis après passage dans l'échangeur 109 et introduits par l'ajutage annulaire 124 à la base du réceptacle 107 est mise en mouvement par la dépression régnant dans le dispositif et traverse la masse 129 de bois torréfié pour en extraire les calories récupérables et en abaisser la température de façon à éviter la prise de feu spontanée possible lors de la mise à l'atmosphère dudit bois à la température de torréfaction.

Etant donné les températures mises en jeu, l'ensemble du dispositif est revêtu d'un isolant calorifique 128.

Portée à haute température la chambre de combustion 118 est coiffée d'un revêtement réfractaire 130 cette chambre a pour objet d'assurer la combustion complète du mélange combustible qui est établis sans excès d'air. En effet le flux gazeux doit être neutre.

La portion haute du réacteur fait partie de la chambre de combustion. Par son rayonnement interne, elle contribue à l'homogénéité de température sur toute la section du flux caloporteur.

Les gaz neutres, refroidis par l'échangeur 109 et extraits par le ventilateur 108 contiennent une certaine proportion de fumées constituées de goudrons formés notamment au moment du grillage réalisé dans le réacteur 101.

Afin d'éviter le rejet de ces fumées et de réintégrer au combustible et sous cette forme un des éléments constitutifs, le procédé se caractérise enfin par le fait que lesdits gaz sont filtrés par passage au travers d'une masse importante de bois déjà torréfié et rassemblé dans un silo de transfert fonctionnant en continu avant le stockage dudit combustible.

Les goudrons déposés en très faible quantité à la surface des fragments diffusent aisément dans le bois devenu poreux après torréfaction.

Les dispositions prises pour les mesures de pressions, de débits et de températures ou encore pour le contrôle de fonctionnement du dispositif sortent du cadre de l'invention et pour cette raison n'ont pas été exposées.

La torréfaction effectuée à 250- 280° C dans un appareil tel qu'on vient de le décrire, a pour effet de fixer sa teneur en eau à 3 % et d'en faire un produit aux caractéristiques stables. On sait d'autre part que la torréfaction n'enlève pas au bois les produits pyroligneux qui représentent environ 50 % du potentiel énergétique total. Le bois torréfié a un pouvoir calorifique de l'ordre de 5 200 Kcal/Kg. Il se prête aux manutentions mécanisées sans former de poussières. Il se conserve bien même en local humide. Il s'allume facilement. C'est entre 250 et 350° C que peuvent être extraites les vapeurs pyroligneuses, vers 350 à 500° C les goudrons, au-delà subsiste le charbon de bois.

On sait enfin que dans la technique des brûleurs à gaz dits à induction il est fait emploi de tuyères à ajutage axial (Venturi) ou annulaire, alimenté en fluide dit inducteur sous pression tandis qu'en amont de l'ajutage la dépression résultante met en mouvement le fluide dit induit. Le fluide pilote et inducteur peut être le gaz carburant ou l'air pouvant être préalablement chauffé.

Dans le dispositif de combustion qu'on va décrire, on réalise la transformation du combustible initial que représente le bois torréfié en un mélange de vapeurs pyroligneuses et d'oxyde de carbone destiné à alimenter un brûleur capable de fournir une flamme continue susceptible d'être employée dans les appareils thermiques existants en substitution des brûleurs à huile ou à gaz.

Le dispositif de combustion, qui comporte d'une part, le foyer dont l'objet principal est de permettre l' extraction des vapeurs pyroligneuses, cette opération s'effectuant grâce aux calories provenant de la combustion partielle du charbon de bois, résidu deladite extraction, combustion partielle qui fournit en outre une certaine quantité d'oxyde de carbone, et d'autre part le brûleur dont l' objet est d'assurer la combustion complète du mélange combustible issu du foyer, ce dispositif est caractérisé en ce que lesdits foyer et brûleur sont associés dans un même ensemble de façon telle que la température desdites vapeurs ainsi que du conduit chargé du transfert ne puisse s'abaisser en dessous de la température de condensation de l'élément distillé le plus lourd.

Le dispositif de combustion peut revêtir deux formes de réalisations : dans le première le foyer et le brûleur sont accolés, et le divergent de la tuyère constitue lui-même la zone portée à haute température où se fixe le front de la flamme; dans la seconde le foyer et le brûleur sont séparés par une conduite, isolée thermiquement et comportant la tuyère, traversée par le mélange inflammable à une vitesse supérieure à celle de la propagation de la flamme, cette dernière se fixant et se développant dans la chambre de combustion tronconique située à l'extrémité de la conduite. L'allumage du brûleur peut être électrique comme connu en soi.

L'alimentation en bois torréfié du dispositif est réalisée mécaniquement et a pour objet de maintenir pleine une colonne tubulaire ouverte au sommet située au-dessus du foyer de telle façon que la hauteur occupée dans celle-ci par le bois torréfié soit constante ainsi que la perte de charge d'un flux d'air la traversant de haut en bas.

L'apport d'air pilote assurant la combustion des vapeurs et de gaz combustibles dans la tuyère, crée en amont une dépression permettant d'une part l'admission d' air de combustion au niveau du foyer et d'autre part le balayage vers le bas et au travers de la colonne d'alimentation en bois torréfié, des vapeurs pyroligneuses.

Le foyer constitué par les braises issues de la combustion partielle du charbon de bois repose selon l'invention, sur une sole matérialisée par le lit de cendres lui-même. La situation stable du lit dans le dispositif est obtenue grâce à l'emploi d'un extracteur mécanique.

La figure 4 représente le dispositif reposant sur une console 201 voisine de l'ouvreau d'une enceinte thermique à chauffer 202.

A la base du dispositif est représentée en coupe schématique la vis 203 destinée à l'extraction mécanique des cendres, au-dessus de laquelle se situe le lit de cendres 204 sur lequel repose la zone de braises 205 surmontée de la réserve pleine de bois torréfié 206 emplissant le tuyau amovible 207.

Au niveau de la zone de braises, soit 1O à 2O cm au-dessus des cendres, la paroi du corps de l'appareil est percée de trous 208 par lesquels l'air de combustion du charbon de bois est admis.

La chambre intérieure du dispositif se développe ensuite vers la tuyère 209 on aperçoit à la base du conduit de liaison 210 incliné vers le haut le talus d'éboulement 215 formé par les braises en ignition.

A l'étranglement de la tuyère se situe l'ajutage annulaire 211 en communication avec la chambre 212 et le conduit d'amenée d'air 213 pilote et de combustion des vapeurs et gaz dans le brûleur.

Le divergent 214 de la tuyère est à forte ouverture car il constitue la chambre de combustion elle-même où se stabilise le front de flamme dans le brûleur.

Une dépression résultant du principe même de fonctionnement de la tuyère s'installe en amont du brûleur c'est-à-dire dans le foyer lui-même.

La mise en marche et le fonctionnement du dispositif peuvent être obtenus de la façon suivante : un lot de cendres est utilisé pour constituer la sole initiale. Sur celle-ci on dépose du charbon de bois jusqu'à hauteur du talus d'éboulement 215. On établit la pression d'air pilote dans la chambre 212. L'écoulement de l'air dans l'ajutage 211 met le foyer en dépression. Le tuyau amovible 207 ayant été enlevé, à l'aide d'une flamme on allume le charbon de bois placé sur le lit de cendres, puis on remet en place le tuyau 207 que l'on emplit de bois torréfié. Presque aussitôt le dispositif émet une intense fumée blanche sortant de la tuyère 214 il s'agit des vapeurs pyroligneuses que l'on peut, dès lors, allumer. Un appareillage électrique non représenté peut être utilisé à cet effet.

Du fait de la dépression établie dans le foyer, l'air pénètre par les trous 208 prévus à cet effet et entretient la combustion du charbon de bois. La même dépression appelle un faible flux d'air circulant de haut en bas dans le tuyau 207 en traversant le bois torréfié. Ce flux d'air balaye les vapeurs pyroligneuses extraites à l'approche du foyer, les entraîne vers le conduit d'amenée au brûleur, elles s'y mélangent avec l'oxyde de carbone très chaud dans le foyer puis enfin avec l'air pilote préchauffé amené au brûleur pour former dans celui-ci le front de flamme qui se développera dans l'enceinte thermique 207.

La figure 5 représente une variante du dispositif dans laquelle le divergent de la tuyère 217 de type Venturi, est beaucoup plus allongé. Il en résulte l'établissement dans la conduite 218 d'une vitesse de déplacement du mélange inflammable supérieure à celle de propagation de la flamme qui s'établira alors dans un second divergent à ouverture plus large 219 situé à l'extrémité du conduit 218. Cette disposition permet d'alimenter un four à proximité duquel il est impossible de placer convenablement le dispositif de la figure 4.

Le conduit 218 doit être convenablement isolé pour ne pas autoriser l'abaissement de la température des vapeurs pyroligneuses, pour la même raison l'air de combustion admis à l'injecteur axial 220 devra être suffisamment préchauffé.

On observera que les caractéristiques géométriques du produit de l'invention assurent sa descente régulière vers la zone chaude du foyer, et une perméabilité en masse constante pour l'air de balayage. Il en résulte une grande stabilité de la répartition des températures et par suite de la composition du mélange combustible amené au brûleur.

## Revendications

1. Procédé d'obtention d'un produit formé de bois torréfié à partir de tronçons de bois verts, selon lequel on place une masse (115) de tronçons à torréfier dans un réacteur (101), et on fait circuler dans cette masse un gaz non oxydant, ce gaz pénétrant dans la masse à une température supérieure à celle de la torréfaction, caractérisé en ce que ledit gaz traverse la masse en passant d'abord sur des tronçons non séchés ou partiellement séchés, et sort de la masse en passant sur les tronçons en fin de torréfaction, et en ce que la vitesse de circulation des gaz n'est que faiblement inférieure à celle qui causerait l'entraînement des tronçons torréfiés par le courant de gaz.

2. Procédé selon la revendication 1, caractérisé en ce qu'on utilise des tronçons sensiblement rectilignes et de longueur uniforme.

3. Procédé selon la revendication 2, caractérisé en ce que ledit gaz non oxydant circule en partie en circuit fermé, et est constitué essentiellement de vapeur d'eau provenant des tronçons et de gaz de combustion provenant d'un brûleur (116) destiné à élever la température dudit gaz.

4. Procédé selon la revendication 3, caractérisé en ce qu'une partie dudit gaz est refroidie et débarrassé (en 109) d'une partie de son eau, puis envoyée dans la masse qui vient d'être torréfiée, de façon à la refroidir et à empêcher l'apparition de réactions exothermiques.

5. Procédé selon l'une des revendications 1 à 4, caractérisé en ce que le temps de torréfaction à partir du moment où le produit atteint 100°C, ne dépasse pas 10 minutes.

6. Procédé selon l'une des revendications 1 à 5, caractérisé en ce que la torréfaction et le refroidissement sont effectués dans une enceinte unique s'étendant verticalement et pourvue de dispositifs étanches pour l'admission de produit "vert" à la partie supérieure et pour l'évacuation de produit torréfié à la partie inférieure, du gaz non oxydant à haute température étant envoyé à la partie supérieure sous une pression supérieure à la pression atmosphérique (par 121) du gaz non oxydant.

7. Procédé selon la revendication 6, caractérisé en ce qu'on envoie à la partie supérieure de l'enceinte une partie du gaz non oxydant qui a été évacué de la zone centrale de l'enceinte.

8. Procédé selon l'une des revendications 1 à 7, caractérisé en ce que le séchage précède la torréfaction sans refroidissement intermédiaire.

9. Procédé selon l'une des revendications 2 à 8, caractérisé en ce que le séchage est opéré à l'aide des gaz chauds provenant de la torréfaction.

10. Procédé de production d'énergie thermique à l'aide du produit obtenu selon l'une des revendications 1 à 9, caractérisé en ce qu'on extrait par distillation sensiblement toutes les matières pyroligneuses contenues dans le produit torréfié, on transforme le carbone restant en monoxyde de carbone, la chaleur produite par cette réaction tant utilisée pour opérer ladite distillation, et on envoie ensemble le mélange des matières pyroligneuses et du monoxyde de carbone dans un brûleur (216), en maintenant la température desdites matières pyroligneuses au-dessus de leur point de condensation.

11. Procédé selon la revendication 10, caractérisé en ce que la distillation des matières pyroligneuses et la transformation du carbone en monoxyde de carbone ont lieu dans le même foyer, qui est pourvu d'une part d'un ou plusieurs passages de gaz pour balayer les matières pyroligneuses et d'autre part d'un ou plusieurs passages d'air (208) pour la transformation de carbone en monoxyde de carbone, le foyer comportant une sortie commune (210) pour les matières pyroligneuses distillées et pour le monoxyde de carbone.

12. Procédé selon l'une des revendications 10 à 11, caractérisé en ce que le gaz destiné à balayer les matières pyroligneuses traverse, dans le sens des températures croissantes, une masse de produit torréfié (206) d'épaisseur suffisante pour assurer un débit sensiblement constant.

13. Procédé selon l'une des revendications 10 à 12, caractérisé en ce que le foyer est du type vertical, le produit torréfié progressant (206) en descendant dans ce foyer, le gaz de balayage traversant la masse du produit torréfié en descendant, la ou les arrivées d'air (208) pour la transformation du carbone étant situées au-dessus d'une couche de cendres (204) maintenue à un niveau sensiblement constant, et la sortie commune (210) des matières pyroligneuses et du monoxyde de carbone étant située entre le niveau des cendres et celui de la base de la zone de distillation.

14. Procédé selon l'une des revendications 10 à 13, caractérisé en ce qu'on utilise un brûleur du type à induction à air pilote (211 à 213, 220) capable d'engendrer dans le foyer une dépression suffisante pour y aspirer le gaz de balayage et l'air de transformation du carbone.

15. Procédé d'obtention d'un produit formé de bois torréfié selon l'une des revendications 3 à 9, caractérisé en ce que le brûleur (116) est alimenté avec un gaz combustible obtenu à partir d'une portion de bois torréfié prélevée sur la production, conformément à l'une des revendications 10 à 14.

Claims

1. Process for obtaining a product made up of roasted wood from green wood lengths, according to which a mass (115) of lengths to be roasted is placed in a reactor (101) and a nonoxidising gas is passed through this mass, this gas entering the mass at a temperature higher than that of the roasting, characterised in that the said gas passes through the mass by first of all flowing over the undried or partially dried lengths, and leaves the mass by flowing over the lengths at the end of roasting, and in that the speed of travel of the gases is only slightly lower than that which would result in the entrainment of the roasted lengths by the gas stream.

2. Process according to Claim 1, characterised in that substantially rectilinear lengths of uniform length are employed.

3. Process according to Claim 2, characterised in that the said nonoxidising gas travels partly in a closed circuit and consists essentially of steam originating from the lengths and of combustion gas originating from a burner (116) intended to raise the temperature of the said gas.

4. Process according to Claim 3, characterised in that a proportion of the said gas is cooled and freed (in 109) from part of its water and is then conveyed into the mass which has just been roasted, so as to cool it and to prevent the appearance of exothermic reactions.

5. Process according to one of Claims 1 to 4, characterised in that the roasting period from the time when the product reaches 100°C does not exceed 10 minutes.

6. Process according to one of Claims 1 to 5, characterised in that the roasting and the cooling are performed in a single enclosure extending vertically and provided with leakproof devices for allowing "green" product to enter the upper part and for removing the roasted product in the lower part, nonoxidising gas at high temperature being conveyed to the upper part at a pressure which is higher than atmospheric pressure (via 121)

7. Process according to Claim 6, characterised in that a proportion of the nonoxidising gas which has been removed from the central zone of the enclosure is returned to the upper part of the enclosure.

8. Process according to one of Claims 1 to 7, characterised in that the drying precedes the roasting without intermediate cooling.

9. Process according to one of Claims 2 to 8, characterised in that the drying is carried out with the aid of the hot gases originating from the roasting.

10. Process for the production of heat energy with the aid of the product obtained according to one of Claims 1 to 9, characterised in that substantially all the pyroligneous substances present in the roasted product are extracted by distillation, the remaining carbon is converted into carbon monoxide, the heat produced by this reaction being employed for carrying out the said distillation, and the mixture of the pyroligneous substances and of carbon monoxide is conveyed together to a burner (216), the temperature of the said pyroligneous substances being maintained above their condensation point.

11. Process according to Claim 10, characterised in that the distillation of the pyroligneous substances and the conversion of carbon into carbon monoxide take place in the same hearth, which is provided, on the one hand, with one or more gas passages for purging the pyroligneous substances and, on the other hand, with one or more air passages (208) for converting carbon into carbon monoxide, the hearth comprising a common exit (210) for the distilled pyroligneous substances and for the carbon monoxide.

12. Process according to either of Claims 10 and 11, characterised in that the gas intended to purge the pyroligneous substances passes, in the direction of increasing temperatures, through a mass of roasted product (206) of sufficient thickness to ensure a substantially constant flow rate.

13. Process according to one of Claims 10 to 12, characterised in that the hearth is of the vertical type, the roasted product moving forward (206) while descending in this hearth, the purging gas passing through the mass of the roasted product while descending, the air entry or entries (208) for converting the carbon being situated above a layer of ash (204) maintained at a substantially constant level, and the common exit (210) for the pyroligneous substances and carbon monoxide being situated between the level of ash and that of the base of the distillation zone.

14. Process according to one of Claims 10 to 13, characterised in that a burner of the induction type with pilot air (211 to 213, 220) is employed, which is capable of generating a sufficient pressure reduction in the hearth to draw into it the purging gas and the air for converting the carbon.

15. Process for obtaining a product made up of roasted wood according to one of Claims 3 to 9, characterised in that the burner (116) is fed with a fuel gas obtained from a portion of roasted wood abstracted from the output, in accordance with one of Claims 10 to 14.

**Patentansprüche**

1. Verfahren zum Erzeugen von geröstetem Holz aus Grünholzstücken, nach welchem man eine Menge (115) aus zu röstenden Holzstücken in einen Reaktor (101) einbringt und in dieser Menge ein nicht oxidierendes Gas zirkulieren läßt, wobei das Gas in die Menge mit einer Temperatur oberhalb derjenigen der Röstung eindringt, dadurch gekennzeichnet, daß das Gas durch die Menge hindurchgeht, indem es zunächst über nicht getrocknete oder teilweise getrocknete Holzstücke geht und die Menge verläßt, indem es über Holzstücke in der Endstufe der Röstung hinwegstreicht und daß die Geschwindigkeit der Zirkulation des Gases nur schwach unter derjenigen liegt, die das Mitführen gerösteter Holzstücke durch den Gasstrom bewirken würde.

2. Verfahren nach Anspruch 1, dadurch gekennzeichnet, daß man Holzstücke verwendet, die ziemlich genau geradlinig und von gleichmäßiger Länge sind.

3. Verfahren nach Anspruch 2, dadurch gekennzeichnet, daß das nicht oxidierende Gas zum Teil in einem geschlossenen Kreislauf zirkuliert und im wesentlichen aus von den Holzstücken herrührendem Wasserdampf und aus Verbrennungsgas zusammengesetzt ist, welches von einem Erhitzer (116) stammt, der dazu bestimmt ist, die Temperatur des Gases zu erhöhen.

4. Verfahren nach Anspruch 3, dadurch gekennzeichnet, daß ein Teil des genannten Gases gekühlt und (in 109) von einem Teil seines Wassers befreit worden ist und sodann in die soeben geröstete Menge eingebracht wird, um diese zu kühlen, um das Auftreten exothermischer Reaktionen zu verhindern.

5. Verfahren nach einem der Ansprüche 1 bis 4, dadurch gekennzeichnet, daß die Zeitdauer der Röstung, beginnend mit dem Zeitpunkt, an dem das Produkt die Temperatur von 100°C erreicht, 10 Minuten nicht überschreitet.

6. Verfahren nach einem der Ansprüche 1 bis 5, dadurch gekennzeichnet, daß die Röstung und die Kühlung innerhalb einer einzigen gemeinsamen Umgrenzung durchgeführt werden, welche sich vertikal erstreckt und mit dichten Vorrichtungen für den Einlaß des "grünen" Produkts an dem oberen Teil und für die Entnahme des gerösteten Produkts an dem unteren Teil versehen ist, wobei nicht oxidierendes Gas auf hoher Temperatur und unter einem höheren Druck als dem Atmosphärendruck (durch 121) an dem oberen Teil zugeführt wird.

7. Verfahren nach Anspruch 6, dadurch gekennzeichnet, daß man an dem oberen Teil der Umgrenzung bzw. des Gehäuses einen Teil des nicht oxidierenden Gases wieder zuführt, welches aus der Mittelzone des Behälters abgezogen worden ist.

8. Verfahren nach einem der Ansprüche 1 bis 7, dadurch gekennzeichnet, daß die Trocknung der Röstung ohne eine zwischengesetzte Abkühlung vorangeht.

9. Verfahren nach einem der Ansprüche 2 bis 8, dadurch gekennzeichnet, daß die Trocknung mit Hilfe des heißen Gases durchgeführt wird, welches aus der Röstung hervorgeht.

10. Verfahren zur Erzeugung thermischer Energie mit Hilfe des nach einem der Ansprüche 1 bis 9 erhaltenen Produktes, dadurch gekennzeichnet, daß man die Holzessigstoffe insgesamt, die das Röstprodukt enthält, durch Destillation extrahiert, den verbleibenden Kohlenstoff in Kohlenmonoxid umwandelt, die durch diese Reaktion erzeugte Wärme einsetzt, um diese Destillation durchzuführen, und daß man die Mischung aus den Holzessigstoffen und Kohlenmonoxid zusammen in einen Brenner (216) oder Erhitzer gibt, wobei die Holzessigstoffe auf einer Temperatur oberhalb ihres Kondensationspunktes gehalten werden.

11. Verfahren nach Anspruch 10, dadurch gekennzeichnet, daß die Destillation der Holzessigstoffe und die Umwandlung des Kohlenstoffes in Kohlenmonoxid in dem selben Bereich oder Feuerraum durchgeführt werden, der einerseits mit einem oder mehreren Durchgängen für Gas, um die Holzessigstoffe mitzunehmen und zum anderen mit einem oder mehreren Luftdurchgängen (208) zur Umwandlung des Kohlenstoffs in Kohlenmonoxid versehen ist, wobei die Feuerstelle einen gemeinsamen Auslaß (210) für die destillierten Holzessigstoffe und das Kohlenmonoxid aufweist.

12. Verfahren nach einem der Ansprüche 10 oder 11, dadurch gekennzeichnet, daß das Gas, welches zum Mitführen der Holzessigstoffe bestimmt ist, im Sinne steigender Temperaturen durch eine Menge des gerösteten Produktes (206) mit ausreichender Mächtigkeit hindurchgeht, um einen ziemlich konstanten Drucksatz zu erhalten.

13. Verfahren nach einem der Ansprüche 10 bis 12, dadurch gekennzeichnet, daß der Feuerraum einen vertikalen Aufbau hat, wobei das geröstete Produkt fortschreitend (206) in den Feuerraum nach unten absteigt, wobei das Anströmgas durch die Menge des gerösteten Produktes herabfallend hindurchgeht, der oder die Eintritte (208) für die Luft für die Umwandlung des Kohlenstoffs oberhalb eines Aschebettes (204) angeordnet ist bzw. sind, welches auf einer im wesentlichen konstanten Höhe gehalten wird, und daß der gemeinsame Auslaß (210) des Holzessigmaterials und des Kohlenmonoxids zwischen dem Niveau der Asche und dem des Grundes der Destillationszone angeordnet ist.

14. Verfahren nach einem der Ansprüche 10 bis 13, dadurch gekennzeichnet, daß man einen Induktions-Luftpilot-Brenner (211 bis 213, 220) einsetzt, der in der Lage ist, einen ausreichenden Unterdruck im Feuerraum zu erzeugen, um von dorther das Anströmgas und die Luft für die Umwandlung des Kohlenstoffs anzusaugen.

15. Verfahren zum Erzeugen eines aus geröstetem Holz gebildeten Produktes nach einem der Ansprüche 3 bis 9, dadurch gekennzeichnet, daß der Brenner (116) mit einem brennbaren Gas gespeist wird, welches von einem Teil des gerösteten Holzes her erhalten wird, welcher gemäß einem der Ansprüche 10 bis 14 entnommen wird.

FIG. 1

FIG.2

FIG.3